# EUROPÄISCHE PATENTSCHRIFT

(11) **EP 0 486 636 B1**
(45) Veröffentlichungstag und Bekanntmachung des Hinweises auf die Patenterteilung: **01.02.1995**
(21) Anmeldenummer: 91910098.2
(22) Anmeldetag: 28.05.1991
(51) Int. Cl.: B29C 47/20

(54) **SPEICHERKOPF FÜR EINE BLASFORMMASCHINE**
STORAGE HEAD FOR A BLOW MOULDING MACHINE
TETE D'ACCUMULATION POUR MACHINES DE MOULAGE PAR SOUFFLAGE

(30) Priorität: 01.06.1990 DE 4017699
(43) Veröffentlichungstag der Anmeldung: 27.05.1992
(73) Patentinhaber: MAUSER-WERKE GmbH, D-50321 Brühl (DE)
(72) Erfinder: LANGOS, Peter, D-5205 St. Augustin 1 (DE); LEHMANN, Manfred, D-5000 Köln 90 (DE)
(74) Vertreter: König, Reimar, Dr.-Ing.
(86) Internationale Anmeldenummer: EP9100985
(87) Internationale Veröffentlichungsnummer: WO9118732

(56) Entgegenhaltungen:
- DE-A- 2 046 334
- DE-A- 2 239 987
- DE-A- 3 000 444
- DE-A- 3 026 822
- US-A- 3 985 490
- US-A- 4 548 569

## Beschreibung

Die Erfindung bezieht sich auf einen Speicherkopf für eine Blasformmaschine zur diskontinuierlichen Herstellung von Kunststoff-Hohlkörpern mit wenigstens einem an das Speicherkopfgehäuse angeschlossenen Extruder zur Einspeisung wenigstens einer schmelzflüssigen Kunststoffschmelze in den Speicherkopf mit einer zentral angeordneten Pinole und einem die Pinole konzentrisch umschließenden als Wendelkanal ausgebildeten Verteilerorgan zur Verteilung der Kunststoffschmelze über einen kreisförmigen Umfang und Zuführung in einen ringförmigen Speicherraum unterhalb eines Ausstoßkolbens, der axial verschiebbar im Speicherkopfgehäuse gelagert ist und mittels dem die im Speicherraum gespeicherte Kunststoffschmelze durch einen sich unten an den Speicherraum anschließenden ringförmigen Düsenspalt ausstoßbar ist.

Ein vergleichbarer Speicherkopf ist z.B. aus der DE-OS 30 00 444 vorbekannt und dort ausführlich beschrieben. Hierbei ist der Wendelkanalverteiler zur Verteilung der schmelzflüssigen Kunststoffschmelze auf der Außenwandung des Ausstoßkolbens angeordnet. Der spiralförmige Wendelkanal wird durch zwei oberhalb des Wendelkanals in der Außenwandung des Ausstoßkolbens angeordnete Axialnuten mit schmelzflüssigem Kunststoff versorgt, die mit entsprechenden Radialbohrungen in dem Speichergehäuse für die Materialeinspeisung vom Extruder in Verbindung stehen. Nachteilig hierbei ist, daß bei der Verteilung des Kunststoffes über den Umfang, wobei der Speicherraum aufgefüllt wird und der Ausstoßkolben sich langsam und stetig in seine obere Ausstoßposition bewegt, der Wendelkanalverteiler ständig von zwei sich relativ zueinander bewegenden Außenwandungen begrenzt wird und das einströmende Kunststoffmaterial ständig einer Scherwirkung unterliegt. Weiterhin ist beim Ausstoßvorgang keine definierte Ausstoßkante am Außenumfang des Ausstoßkolbens vorhanden, so daß die gesamte Kunststoffringsäule im Speicherraum auf ihrer Außenseite an der Innenwandung des Speichergehäuses anhaftet und nicht über den gesamten Querschnitt gleichmäßig ausgestoßen wird, sondern vielmehr keilartig nach außen verdrängt wird und am Speichergehäuse anhaftet und abgeschert bzw. abgeschmiert wird. Dies führt zu unerwünschten Materialverschiebungen und zu hoher innerer Reibung und ungleichmäßigem Druckaufbau innerhalb des schmelzflüssigen Kunststoffmaterials. Als Folge ergibt sich ein gestörter Schichtaufbau in dem durch die Ringspaltdüse des Speicherkopfes ausgestoßenen schlauchförmigen Vorformlinges bzw. in dem erblasenen Kunststoff-Hohlkörper bzw. Endprodukt.

Diese Nachteile sollen vermieden werden.
Es ist daher Aufgabe der vorliegenden Erfindung, zur Qualitätsverbesserung der erblasenen Hohlkörper, wie z.B. Fässer oder Kanister, durch ein als Wendelkanalverteiler ausgebildetes Verteilerorgan einen günstigen Schichtaufbau mit Vielfachüberlappung des Kunststoffmateriales im Speicherkopf zu erzeugen und diese Kunststoffringsäule ohne Störung des inneren Schichtaufbaus gleichmäßig und vollständig ausstoßen zu können.

Diese Aufgabe wird erfindungsgemäß mit einer Vorrichtung nach Anspruch 1 gelöst.

Bei dem aus DE-A-2 239 987 bekannten Speicherkopf bzw. Staukopf besteht der Ausstoßkolben aus einem kegelförmigen Kern (2) und einem eine entsprechend sich kegelförmig verjüngende Ausnehmung (4) aufweisenden inneren Teil (1''). Kern (2) und Teil (1'') sind fest miteinander verbunden und innerhalb des Gehäuses (1) verschiebbar auf dem Dorn (10) gelagert. Auf dem Kern (2) ist eine eingängige schraubenlinienförmige Nut (3) eingeprägt. Dabei soll der Kern (2) ausdrücklich so eng an der Innenwandung der Bohrung (4) anliegen, daß ein Überströmen des thermoplastischen Materials mit Sicherheit vermieden ist!

Dies ist bei der vorliegenden Erfindung nicht der Fall; die technische Lehre aus DE-A-2 239 987 geht daher in eine andere Richtung.

Durch den günstigen Aufbau des beanspruchten Ausstoßkolbens ist der Wendelkanalverteiler sozusagen innerhalb des Ausstoßkolbens selbst mit stationärer äußerer Begrenzung des Wendelkanalspaltes ausgebildet. Das Einströmen des gleichmässig auf den Umfang verteilten Kunststoffmateriales in den Speicherraum erfolgt stirnseitig aus dem oszillierenden Ausstoßkolben und der Verteilerraum des Wendelkanalverteilers wird nicht durch eine sich ständig relativ zur anderen Begrenzungswand bewegenden Gegenwandung gebildet. Dadurch wird eine Scherwirkung bzw. innere Reibung im Kunststoffmaterial schon bei der Umfangsverteilung des Materiales vermieden. Weiterhin herrschen gleiche Bedingungen für den Ausstoßvorgang selbst vor. Der Speicherraum wird vom Ausstoßkolben in Umfangsrichtung vollständig glatt und auf beiden Seiten (Außenwandung der Pinole und Innenwandung des Speicherkopfgehäuses sowie untere Innenkante und Außenkante des Ausstoßkolbens) in etwa gleicher Höhe begrenzt, so daß auch beim Ausstoßvorgang keine ungleichen Scherflächen vorliegen bzw. ungleiche Scherkräfte auf das gespeicherte Kunststoffmaterial einwirken können.

Durch den im Ausstoßkolben angeordneten Wendelkanalverteiler wird der schmelzflüssige Kunststoff in vorteilhafter Weise in mehreren dünnen sich wechselweise überlagernden bzw. überlappenden Schichten über den Umfang verteilt; dieser günstige Schichtenaufbau wird bei der Materialverteilung im Verteilerraum sowie beim Ausstoßvorgang aus dem Speicherraum nicht gestört, so daß das erblasene Produkt frei von unerwünschter Streifenbildung ist und das Material bzw. die einzelnen Schichten nicht nur an radialen Stoßkanten über die Wandstärke oder einen schmalen sich überlappenden Bereich, sondern in mehreren dünnen Schichten über den gesamten Umfang miteinander verschweißt ist. Hierdurch wird die Produktqualität des erblasenen Hohlkörpers erheblich verbessert.
Dabei kann es aus fertigungstechnischen Gründen vorteilhaft sein, wenn das äußere oder/und das innere zylinderförmige Rohrstück des Ausstoßkolbens zweischalig, d.h. aus zwei Schalenhälften bestehend ausgebildet ist.

Als besonderes Merkmal der Erfindung ist vorgesehen, daß der Wendelkanalverteiler auf der Außenwandung des inneren Rohrstückes oder/und auf der Innenwandung des äusseren Rohrstückes des Ausstoßkolbens ausgebildet ist. Dabei ist die Länge des Verteilerorganges bzw. der einzelnen Wendelkanäle in axialer Richtung etwa gleich groß wie der Durchmesser des Rohrstückes auf der die Wendeln eingearbeitet sind. Mit diesem Speicherkopf für eine Blasformmaschine zur diskontinuierlichen Herstellung von KunststoffHohlkörpern bzw. mit diesem als Wendelkanalverteiler ausgebildeten Verteilerorgan sind für alle Kunststoffpartikel rheologisch gleiche Fließeigenschaften vorgegeben und es wird eine verbesserte Überlappung und Verteilung der Schmelzeströme im Verteilerorgan bei gleichzeitiger Erhöhung der Durchsatzleistung bzw. Produktionsgeschwindigkeit erreicht.

Der Wendelkanalverteiler läßt sich mit einem auf der Außenwandung des inneren Rohrstückes bzw. auf der Innenwandung des äußeren Rohrstückes eingearbeiteten mehrgängigen Gewinde bzw. Wendelkanal bestimmter Steigung vergleichen. Die Wendelkanäle werden jeweils einzeln eingespeist und ihre Tiefe nimmt in Fließrichtung stetig ab. Dadurch werden die in den Wendeln vorhandenen Kunststoffströme allmählich in axiale Strömungen überführt. Die axialen Strömungen bilden sich als Umfangsschalen im größer werdenden Spalt zwischen dem Wendelkanalverteiler und der ihn abdeckenden Hülse aus. Die axial abfließenden Schmelzeströme der einzelnen Wendelkanäle überlappen jeweils die darunter fließenden axialen und in dem Wendelkanälen fließenden Rest-Schmelzeströme.

In spezieller Ausgestaltung der Erfindung ist vorgesehen, daß die Wendeln des Wendelkanalverteilers über wenigstens eine Längsnut mit schmelzflüssigem Kunststoff versorgt werden, wobei die Längsnut in etwa gleicher Höhe wie die Wendeln angeordnet ist und die Längsnut unten über eine Radialbohrung mit dem Extruder und oben mit dem Beginn der Wendeln in Materialflußverbindung steht. Hierbei wird also das schmelzflüssige Kunststoffmaterial über zwei oder vier seitlich liegende Einspeisenuten direkt durch die Speicherkopfgehäusewandung an den Beginn bzw. den Anfang der einzelnen Wendeln im Ausstoßkolben herangeführt. Dadurch, daß die Längsnuten etwa in gleicher Höhe wie die Wendeln angeordnet sind, wobei die Längsnuten unten über eine Radialbohrung mit dem Extruder und oben mit dem Beginn der Wendeln in Materialflußverbindung stehen, wird in vorteilhafter Weise eine verkürzte Bauhöhe des Verteilerorganes erreicht.

Mit dem erfindungsgemäßen Wendelkanalverteiler werden folgende Vorteile erzielt:
- weitreichende Überlappung der einzelnen Schmelzeströme bzw. Schichten mit nur einem Schmelzverteiler,
- Überlappungslänge über den halben Umfang hinaus bis ca. 240 ° in Umfangsrichtung (wichtig für die Verschweissung der Einzelströme; dies führt bei einer Ausführung mit z.B. 6 Wendeln und 240 ° Überlappungslänge zu einer Vierfachüberlappung)
- für alle Schmelzströme gelten gleiche rheologische Fließeigenschaften,
- mit dem erfindungsgemäßen Wendelkanalverteiler ist im Vergleich zu konventionellen Verteilerorganen wie z.B. einem Herzkurvenverteiler eine wesentliche Erhöhung der Durchsatzleistung möglich (z.B. ist bei einem 20 1-Kopfspeicher eine Erhöhung der Durchsatzleistung von 650 kg/h auf ca. 800 kg/h mit einer gleichzeitigen Verbesserung der Rundumverteilung des Kunststoffmateriales erreichbar).

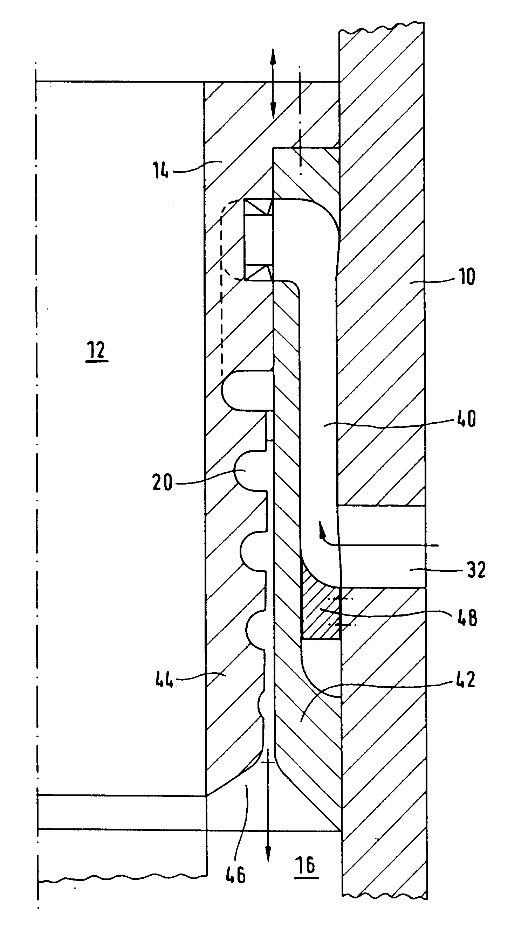

Die Erfindung wird nachfolgend anhand eines in den Zeichnung schematisch dargestellten Ausführungsbeispieles näher erläutert und beschrieben. In der Zeichnung Figur 1 ist mit der Bezugsziffer 10 ein Speicherkopfgehäuse eines erfindungsgemäßen Kopfspeichers mit Wendelkanalverteiler bezeichnet. Hierbei besteht der Ausstoßkolben 14 aus zwei konzentrischen Rohrstücken 42 und 44. Das innere Rohrstück 44 ist auf seiner Außenwandung mit den Wendeln 20 des Wendelkanalverteilers ausgestattet, der sich durch eine abnehmende Tiefe der Wendeln und einen breiter werdenden Spalt zwischen den beiden Rohrstücken 42 und 44 darstellt. Für den Betrieb sind beide Rohrstücke 42 und 44 fest miteinander verbunden. In der Gehäusewandung 10 des Speicherkopfes sind zwei oder vier sich diametral gegenüberliegende Bohrungen 32 vorgesehen, die über entsprechende Rohrleitungen mit wenigstens einem Extruder zur Versorgung mit schmelzflüssigem Kunststoff in Verbindung stehen. In der zeichnerischen Darstellung hat der Ausstoßkolben 14 seine oberste Position erreicht; dabei mündet die in der Außenwandung des äußeren Rohrstückes 42 eingearbeitete Längsnut 40 mit ihrem unteren Ende direkt in die Radialbohrung 32 in der Gehäusewandung 10 des Speicherkopfgehäuses. Die Länge der Axialnut 40 entspricht in etwa der Länge des Ausstoßhubes des Ausstoßkolbens 14. In seiner tiefsten Ausstoßposition steht das obere Ende der Längsnut 40 nahezu direkt vor der Radialbohrung 32. Das vom Extruder zugeförderte schmelzflüssige Kunststoffmaterial fließt durch die Bohrung 32 und die Längsnut 40 nach oben und gelangt dort durch eine Bohrung in Radialrichtung oberhalb des Wendelkanalverteilers in das innere Rohrstück 44. Hier kann eine Wendel direkt eingespeist werden oder es können durch einen in Umfangsrichtung begrenzt horizontal verlaufenden Aufteilkanal gleichzeitig zwei Wendeln mit Kunststoffmaterial versorgt werden. In den einzelnen Wendeln fließt zunächst der Hauptstrom des Kunststoffmaterials schraubenlinienförmig in Richtung der Wendeln, wobei jedoch gleichzeitig in immer mehr zunehmendem Maße ein Teil der Kunststoffschmelze schalenförmig in Umfangs- und in Axialrichtung aus den einzelnen Wendeln "überfließt" und sich schalenförmig überlappt. Schließlich tritt das über den gesamten Umfang gleichmäßig verteilte Kunststoffmaterial stirnseitig zwischen den beiden Rohrstücken 42 und 44 aus dem Wendelkanalverteiler in den unterhalb des Ausstoßkolbens 14 befindlichen Speicherraum 16 aus. In den Längsnuten 40 kann unterhalb der Radialbohrung fest mit der Gehäusewandung 10 verbunden jeweils ein Räumhaken 48 vorgesehen sein, der verhindert, daß sich in der unterhalb der Bohrung 32 befindlichen Längsnut Kunststoffmaterial abseits von dem kontinuierlichen Schmelzestrom ablagert und erst beim nächsten Fülivorgang des Speicherraumes wieder ausgedrückt wird.

In Abwandlung der Erfindung kann die Längsnut 40 genauso gut auf der Innenwandung des Speicherkopfgehäuses 10 eingearbeitet sein, so daß das schmelzflüssige Kunststoffmaterial lediglich durch eine Bohrung in dem äußeren Ringstück 42 zu Beginn der Wendeln bzw. in den Wendelkanalverteiler gelangt. Dabei könnten dann auch die Wendeln 20 des Wendelkanalverteilers auf der zylindrischen Innenfläche des äußeren Rohrstückes 42 angeordnet sein. In anderer Ausgestaltung der Erfindung ist es gleichfalls denkbar, daß das schmelzflüssige Kunststoffmaterial z.B. über das Zentralstück bzw. die Pinole 12 auf welcher der Ausstoßkolben 14 axial verschiebbar gelagert ist, zentral zugeführt wird und dann über entsprechende sternartige Bohrungen und daran anschließende Längsnuten als Hubausgleich in den sich innerhalb des Ausstoßkolbens befindlichen Wendelkanalverteiler einleitbar ist.

Es ist gleichfalls möglich, die Wendeln des Wendelkanalverteilers auf der Außenwandung des inneren Rohrstückes 44 und entsprechend gleichverlaufend ausgebildet auch auf der Innenwandung des äußeren Rohrstückes 42 anzuordnen. Für die Fertigungstechnik ist es dann gegebenenfalls vorteilhaft, wenn das äußere Rohrstück 42 aus zwei Halbschalen besteht.
Wesentlich für die Ausbildung der Wendelkanäle ist jeweils, daß die einzelnen Wendeln mit Abstand voneinander angeordnet sind, wobei der mittlere Abstand etwa die gleiche axiale Breite wie die Breite einer Wendelnut aufweist und daß die Breite der Wendelnuten mit zunehmender Länge langsam aber stetig abnimmt, wobei der dazwischenliegende zylindrische Bereich entsprechend zunimmt bzw. breiter wird. Die Wendelnuten sind seitlich durch definierte Kanten begrenzt, wobei die untere Kante bzw. die sich unten anschließende Zylinderfläche immer ein wenig zurückversetzt ist, so daß der Kunststoffstrom aus der Wendelnut in die zylindrische Umfangsfläche überfließen kann.

Aus oben stehender Beschreibung wird deutlich, daß mit der erfindungsgemäßen Ausführungsform eines Speicherkopfgehäuses mit Wendelkanalverteiler Kunststoff-Hohlkörper mit verbesserter Produktqualität bei gleichzeitiger erhöhter Produktionsgeschwindigkeit herstellbar sind.

### BEZUGSZIFFERNLISTE

- 10: Speicherkopfgehäuse
- 12: Pinole
- 14: Ausstoßkolben
- 16: Speicherraum
- 20: Wendelkanalverteiler
- 32: Bohrung (10) zum Extruder
- 40: Längsnut (42)
- 42: äußeres Rohrstück (14)
- 44: inneres Rohrstück (14)
- 46: Ringspalt (14)
- 48: Räumhaken (Abstreiffinger)

## Patentansprüche

1. Speicherkopf für eine Blasformmaschine zur diskontinuierlichen Herstellung von Kunststoff-Hohlkörpern mit wenigstens einem an dem Speicherkopfgehäuse angeschlossenen Extruder zur Einspeisung wenigstens einer schmelzflüssigen Kunststoffschmelze in den Speicherkopf, mit einer zentral angeordneten Pinole und einem die Pinole konzentrisch umschließenden Verteilerorgan in Form eines Wendelkanalverteilers zur Verteilung der Kunststoffschmelze über einen kreisförmigen Umfang und Zuführung in einen ringförmigen Speicherraum unterhalb eines Ausstoßkolbens, der axial verschiebbar im Speicherkopfgehäuse gelagert und mittels dem die im Speicherraum gespeicherte Kunststoffschmelze intermittierend durch einen sich unten an den Speicherraum anschließenden ringförmigen Düsenspalt ausstoßbar ist,
**dadurch gekennzeichnet,** daß der Ausstoßkolben (14) aus wenigstens zwei zylinderförmigen Rohrstücken (42,44) ausgebildet ist, und die Wendelkanäle des Wendelkanalverteilers (20) auf dem einen Rohrstück (42,44) ausgebildet und durch das andere Rohrstück (42,44) abgedeckt sind, wobei der Wendelkanalverteiler (20) zur Umfangsverteilung der Kunststoffschmelze eine abnehmende Tiefe der Wendeln und einen breiter werdenden Spalt zwischen den beiden Rohrstücken (42,44) aufweist, und wobei der Austritt des auf den Zylinderumfang verteilten Kunststoffes in den Speicherraum (16) aus einem stirnseitig in dem Ausstoßkolben (14) ausgebildeten Ringspalt (46) erfolgt.

2. Speicherkopf nach Anspruch 1,
**dadurch gekennzeichnet,** daß das äußere oder/und innere zylinderförmige Rohrstück (42,44) des Ausstoßkolbens (14) zweischalig bzw. zweiteilig ausgebildet ist.

3. Speicherkopf nach Anspruch 1 oder 2,
**dadurch gekennzeichnet,** daß der Wendelkanalverteiler (20) auf der Außenwandung des inneren Rohrstückes (44) oder/und auf der Innenwandung des äußeren Rohrstückes (42) des Ausstoßkolbens ausgebildet ist.

4. Speicherkopf nach Anspruch 1, 2 oder 3,
**dadurch gekennzeichnet,** daß die Wendeln des Wendelkanalverteilers (20) über wenigstens eine Längsnut (40) mit schmelzflüssigem Kunststoff versorgt werden, wobei die Längsnut (40) in etwa gleicher Höhe wie die Wendeln angeordnet ist, und die Längsnut (40) unten über eine Radialbohrung (32) im Speicherkopfgehäuse (10) mit dem Extruder und oben mit dem Beginn der Wendeln in Materialflußverbindung steht.

## Claims

1. Storage head for a blow moulding machine for the discontinuous production of plastics blow mouldings, having at least one extruder, connected to the storage head housing, for feeding at least one molten plastics melt into the storage head, having a centrally arranged sleeve and a distributor element, concentrically surrounding the sleeve, in the form of a helical channel distributor for distributing the plastics melt over a circular periphery and supplying it to an annular storage space below an ejecting piston which is mounted axially displaceably in the storage head housing and by means of which the plastics melt stored in the storage space can be ejected intermittently through an annular die gap adjoining the storage space at the bottom, characterized in that the ejecting piston (14) is constructed from at least two cylindrical pipe sections (42, 44), and the helical channels of the helical channel distributor (20) are constructed on the one pipe section (42, 44) and are covered by the other pipe section (42, 44), wherein, in order to distribute the plastics melt over the periphery, the helical channel distributor (20) has a decreasing depth of the helical turns and a widening gap between the two pipe sections (42, 44), and wherein the plastics distributed onto the cylinder periphery exits into the storage space (16) from an annular gap (46) constructed in the ejecting piston (14) on the end side.

2. Storage head according to Claim 1, characterized in that the outer and/or inner cylindrical pipe section (42, 44) of the ejecting piston (14) is of two-shell or two-part construction.

3. Storage head according to Claim 1 or 2, characterized in that the helical channel distributor (20) is constructed on the outer wall of the inner pipe section (44) and/or on the inner wall of the outer pipe section (42) of the ejecting piston.

4. Storage head according to Claim 1, 2 or 3, characterized in that the helical turns of the helical channel distributor (20) are supplied with molten plastics by way of at least one longitudinal groove (40), wherein the longitudinal groove (40) is arranged at approximately the same height as the helical turns, and the longitudinal groove (40) at the bottom is in material flow connection with the extruder by way of a radial bore (32) in the storage head housing (10) and at the top is in material flow connection with the start of the helical turns.

## Revendications

1. Tête accumulatrice pour machine de moulage par soufflage destinée à la fabrication en discontinu de corps creux en matière synthétique avec au moins une extrudeuse raccordée au boîtier de la tête accumulatrice pour alimenter cette dernière par au moins une coulée de matière synthétique en fusion, qui comporte une douille centrale entourée d'un élément distributeur concentrique présentant la forme d'un conduit hélicoïdal pour répartir la coulée de matière synthétique sur une périphérie circulaire et l'acheminer vers un réservoir annulaire disposé en dessous d'un piston d'expulsion qui est déplaçable axialement dans le boîtier de la tète accumulatrice et qui permet d'expulser de manière intermittente la coulée de matière synthétique accumulée dans le réservoir par la fente annulaire d'une buse prolongeant la partie inférieure du réservoir, *caractérisée en ce que* le piston d'expulsion (14) se compose d'au moins deux pièces cylindriques (42), (44) et *en ce que* les conduits hélicoïdaux de l'élément distributeur (20) sont formés dans l'une des pièces cylindriques (42), (44) qui est recouverte par l'autre pièce cylindrique, où les conduits hélicoïdaux de l'élément distributeur (20) assurant la répartition périphérique de la coulée de matière synthétique possèdent une profondeur décroissante, où l'espace entre les deux pièces cylindriques (42), (44) s'élargit et où le passage de la matière synthétique répartie sur la périphérie du cylindre vers le réservoir (16) s'effectue à travers une fente annulaire (46) prévue dans le plan frontal du piston d'expulsion (14).

2. Tête accumulatrice selon la revendication 1 *caractérisée en ce que* la pièce cylindrique extérieure ou/et la pièce cylindrique intérieure (42), (44) du piston d'expulsion (14) sont constituées de deux coques ou parties.

3. Tête accumulatrice selon les revendications 1 ou 2 *caractérisée en ce que* l'élément distributeur en forme de conduit hélicoïdal (20) est prévu sur la paroi extérieure de la pièce cylindrique intérieure (44) ou/et sur la paroi intérieure de la pièce cylindrique extérieure (42) du piston d'expulsion (14).

4. Tête accumulatrice selon les revendications 1, 2 ou 3 *caractérisée en ce que* les conduits hélicoïdaux de l'élément distributeur (20) sont alimentés en matière synthétique en fusion par au moins une rainure longitudinale (40) qui est disposée sensiblement à la même hauteur que lesdits conduits hélicoïdaux et qui, pour assurer le flux de matière, est raccordée par son extrémité inférieure à l'extrudeuse par l'intermédiaire d'un alésage radial (32) dans le boîtier de la tête accumulatrice, et, par son extrémité supérieure au commencement des conduits hélicoïdaux.
